Europäisches Patentamt

European Patent Office

Office européen des brevets

(11) Numéro de publication: **0 098 459**
**B1**

(12) **FASCICULE DE BREVET EUROPEEN**

(45) Date de publication du fascicule du brevet: **28.01.87**

(21) Numéro de dépôt: **83106086.8**

(22) Date de dépôt: **22.06.83**

(51) Int. Cl.⁴: **B 60 C 5/00, B 60 C 3/00**

(54) **Enveloppe de pneumatique comportant un corps dépourvu d'armature de renforcement dans les flancs et au sommet, et un renfort de sommet.**

(30) Priorité: **08.07.82 FR 8212165·**

(43) Date de publication de la demande:
**18.01.84 Bulletin 84/03**

(45) Mention de la délivrance du brevet:
**28.01.87 Bulletin 87/05**

(84) Etats contractants désignés:
**AT BE CH DE GB IT LI LU NL SE**

(56) Documents cités:
**FR-A-2 314 059**
**FR-A-2 314 060**
**FR-A-2 395 851**
**GB-A-2 065 040**
**US-A-4 006 767**

(73) Titulaire: **MICHELIN & CIE (Compagnie Générale des Etablissements Michelin) Société dite:**
**4 rue du Terrail**
**F-63000 Clermont-Ferrand (FR)**

(72) Inventeur: **Cesar, Jean-Pierre**
**7 rue de la Croix Potière Sayat**
**F-63530 Volvic (FR)**

(74) Mandataire: **Doussaint, Jean-Marie et al**
**MICHELIN & CIE Service K. Brevets**
**F-63040 Clermont-Ferrand Cedex (FR)**

Courier Press, Leamington Spa, England.

**Revendications**

L'invention concerne les enveloppes de pneumatiques. L'invention concerne plus particulièrement les enveloppes de pneumatiques comportant un corps dépourvu d'armatures de renforcement dans les flancs et au sommet. De telles enveloppes à corps non renforcé comportent une pièce destinée à renforcer le sommet et disposée sur le corps. Cette pièce sera appelée "renfort de sommet" dans la suite de cet exposé mais elle peut aussi être appelée par exemple "armature de sommet" ou "armature de bande de roulement" dans l'industrie des pneumatiques. Ces enveloppes de pneumatiques à corps non renforcé présentent l'avantage d'être simples à réaliser, la fabrication de ces enveloppes se faisant par exemple en réalisant le corps par moulage d'un ou de plusieurs polymères, par exemple en moulant des polyuréthannes.

Il est connu de réaliser des enveloppes de pneumatiques, comportant des corps non renforcés précédemment décrits, de telle sorte que les flancs de ces corps présentent une concavité tournée vers l'extérieur de l'enveloppe. De telles enveloppes sont décrites par exemple dans les brevets ou demandes de brevet suivants: FR—2 148 019, FR—2 391 063, GB—1 503 668, US—1 862 269, US—4 160 007, US—4 197 068.

Les flancs de ces enveloppes doivent être réalisés avec une épaisseur notable pour résister à l'effort de compression provoqué par la pression de gonflage.

Ces enveloppes présentent l'inconvénient d'un poids élevé et de plus, lors des roulages, elles se caractérisent par une résistance au roulement et un échauffement excessifs.

Il est connu d'autre part de réaliser des enveloppes de pneumatiques à corps non renforcés de telle sorte que les flancs de ces corps présentent une concavité tournée vers l'intérieur des enveloppes. De telles enveloppes sont décrites par exemple dans les brevets ou demandes de brevets suivants: EP—5 423, DE—2 023 030 (correspondant au préambule de la revendication 1), DE—24 29 449, US—3 888 291, US—4 049 767. Ces enveloppes ont des corps à flancs plus minces que les enveloppes précédemment décrites. On peut donc diminuer ainsi la résistance au roulement et l'échauffement, mais ces enveloppes nécessitent encore une quantité importante de caoutchoucs, d'où un coût élevé.

Le but de l'invention est de supprimer ces inconvénients.

En conséquence, l'enveloppe de pneumatique conforme à l'invention comportant un corps et un renfort de sommet disposé sur le corps, le corps comportant deux flancs, deux bourrelets avec chacun une tringle de renfort, et un sommet, le sommet du corps étant constitué de trois zones situées sous le renfort de sommet à savoir deux zones latérales voisines des bords du renfort de sommet et une zone centrale adjacente aux zones latérales, le corps étant dépourvu d'armature de renforcement dans les flancs et au sommet, la concavité des flancs étant tournée vers l'intérieur de l'enveloppe, est caractérisée par les points suivants:

a) l'épaisseur $e_0$ du corps au niveau des bords du renfort de sommet et l'épaisseur $e_1$ du corps en un point quelconque de chacune des zones latérales sont liées par la relation

$$0,6 \ e_0 \leq e_1 \leq e_0;$$

b) la largeur $l_1$ de chaque zone latérale et la largeur $L$ du sommet du corps sont liées par la relation:

$$0,02 \ L \leq l_1 \leq 0,30 \ L;$$

c) l'épaisseur moyenne $e_{2m}$ du corps dans la zone centrale et l'épaisseur $e_0$ du corps au niveau des bords du renfort de sommet sont liées par la relation:

$$e_{2m} \leq 0,5 \ e_0;$$

d) chaque angle de raccord intérieur $\beta$ est défini par la relation

$$90° \leq \beta \leq 110°;$$

e) le renfort de sommet comporte deux nappes croisées, l'angle de chaque nappe étant au moins égal à une valeur minimale $\alpha_m$ et au plus égal à une valeur maximale $\alpha_M$ telles que:

$$\alpha_m = \frac{\alpha_0}{2}; \quad \cos \alpha_M = 0,9 \cos \alpha_0;$$

l'angle $\alpha_0$ étant défini par la relation:

$$Tg^2\alpha_0 = \frac{R_s^2 - R_e^2}{2R_s^2(1 - \frac{1}{2}\frac{R_s^2 - R_e^2}{\rho_s R_s})}$$

où $\rho_s$ représente le rayon de courbure de la nappe considérée, $R_s$ représente la distance de cette nappe par rapport à l'axe XX' de l'enveloppe, $R_e$ représente la distance, par rapport à l'axe XX' de l'enveloppe, des points A, B où le corps a la plus grande largeur, dans une section radiale, la droite AB étant parallèle à l'axe XX' de l'enveloppe.

L'invention sera aisément comprise à l'aide des exemples qui suivent et des figures relatives à ces exemples. Parmi ces figures, qui sont toutes schématiques:

— la figure 1 représente en coupe radiale une enveloppe de pneumatique conforme à l'invention;
— la figure 2 représente en partie, vu de dessus, le renfort de sommet de l'enveloppe représentée à la figure 1, la bande de roulement étant supposée enlevée;
— la figure 3 représente en coupe radiale le sommet de l'enveloppe représentée à la figure 1;

— la figure 4 représente en coupe radiale une partie du sommet représenté à la figure 3;

— la figure 5 représente en coupe radiale le sommet d'une autre enveloppe conforme à l'invention.

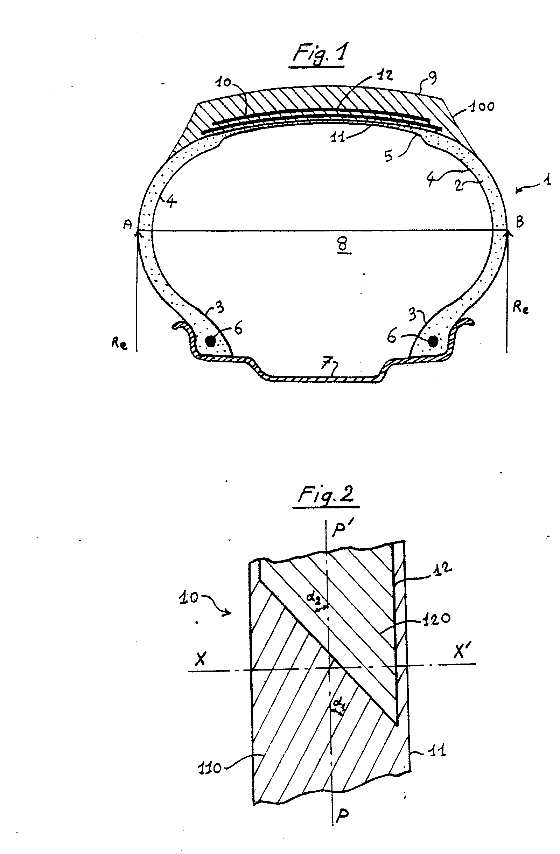

La figure 1 représente une enveloppe de pneumatique conforme à l'invention. Cette enveloppe 1 comporte un corps 2 constitué de deux bourrelets 3, de deux flancs 4 et d'un sommet 5. Les bourrelets 3 comportent chacun une tringle 6 de renfort, ces bourrelets 3 permettant de monter l'enveloppe 1 sur une jante 7. On peut cependant envisager des bourrelets 3 dépourvus de tringles de façon connue en soi. On peut même envisager des enveloppes sans bourrelet. Le corps 2 est dépourvu d'armature de renforcement dans les flancs 4 et le sommet 5, c'est-à-dire qu'il est dépourvu de fils ou de câbles de renforcement à ces endroits, mais le corps 2 peut éventuellement comporter des fibres courtes de renforcement par exemple des fibres métalliques, des fibres minérales, notamment des fibres de verre, des fibres organiques, notamment des fibres cellulosiques ou des fibres en polymères synthétiques comme par exemple les fibres en polyamides aromatiques ou non aromatiques, en polyesters. Le corps 2 a été réalisé par exemple par moulage à partir d'un ou plusieurs polymères pâteux ou liquides, par exemple un ou plusieurs polyuréthannes, ces polymères comportant si on le désire des additifs divers connus en soi, par exemple les fibres courtes mentionnées précédemment.

La concavité des flancs 4 est tournée vers l'intérieur 8 de l'enveloppe 1.

L'enveloppe 1 comporte en outre une bande de roulement 9 et un renfort de sommet 10 disposé sur le corps 2 et donc à l'extérieur de ce corps. Le renfort 10 peut être disposé sur le corps 2 soit directement, soit par exemple avec interposition d'une couche de liaison, notamment une gomme à l'état solide ou liquide au moment de son emploi. L'enveloppe 1 est réalisée par exemple en disposant le renfort de sommet 10 sur le corps 2 moulé et en moulant ensuite la bande de roulement 9 sur le corps 2 et sur le renfort 10, ce renfort 10 étant ainsi disposé entre le corps 2 et la bande de roulement 9. Le moulage de la bande de roulement 9 est effectué avec une ou plusieurs matières, notamment un ou plusieurs polyuréthannes. Il va de soi que d'autres techniques de réalisation sont possibles, par exemple en appliquant sur le corps 2 et sur le renfort 10 une bande de roulement 9 préparée à part à l'aide de caoutchoucs divers, notamment à l'aide de caoutchouc naturel. Il va de soi aussi qu'on peut éventuellement interposer une couche de liaison entre la bande de roulement 9 d'une part et le corps 2 et/ou le renfort 10 d'autre part, et que le renfort 10 peut être appliqué sur le corps 2 en même temps que la bande de roulement 9, ces deux pièces 9, 10 formant par exemple alors une pièce unique.

L'ensemble constitué par le sommet 5 du corps 2, la bande de roulement 9 et le renfort de sommet 10 constitue le sommet 100 de l'enveloppe 1. Le renfort de sommet 10 est constitué par exemple de deux nappes 11, 12 dites "nappes de sommet" et disposées l'une au-dessus de l'autre, la nappe 11 étant la nappe intérieure, c'est-à-dire la nappe la plus proche du corps 2. La nappe 11 comporte des câbles 110 parallèles entre eux, chacun de ces câbles faisant l'angle $\alpha_1$ avec le plan équatorial de l'enveloppe 1, c'est-à-dire le plan perpendiculaire à l'axe de l'enveloppe 1 et passant au milieu du sommet 5. De même, la nappe 12 comporte des câbles 120 parallèles entre eux, chacun de ces câbles faisant l'angle $\alpha_2$ avec le plan équatorial de l'enveloppe. Ces angles $\alpha_1$ et $\alpha_2$ ont été représentés à la figure 2, le plan équatorial étant représenté par la ligne PP' et l'axe de l'enveloppe 1 par la ligne XX'. Les angles $\alpha_1$ et $\alpha_2$ sont chacun au plus égal à 90° et seront décrits plus en détail ultérieurement.

Pour la clarté du dessin, à la figure 2 la nappe extérieure 12 a été supposée partiellement enlevée et dans chacune des nappes 11, 12 les câbles 110 et 120 ont été représentés plus écartés qu'ils ne le sont en réalité, la bande de roulement 9 étant supposée enlevée.

Il va de soi qu'au lieu d'utiliser des câbles on peut utiliser éventuellement des fils unitaires. Les câbles 110, 120 sont réalisés par exemple en matière métallique, notamment en acier recouvert éventuellement d'une couche métallique différente comme par exemple le zinc, le laiton. Dans chaque nappe 11, 12, les câbles 110, 120 sont par exemple enrobés de caoutchouc de façon connue. Il va de soi que les fils unitaires ou câbles du renfort de sommet 10 peuvent être réalisés avec des matières non métalliques, par exemple des matières minérales, notamment le verre, ou des polymères organiques, notamment des polymères synthétiques comme par exemple les polyamides aromatiques ou non aromatiques, les polyesters.

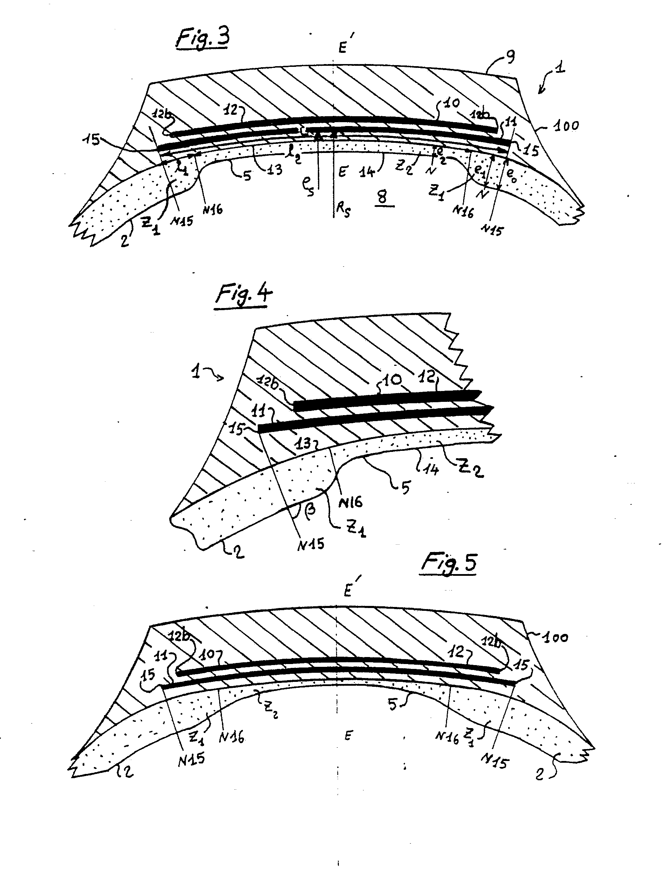

La figure 3 représente plus en détail le sommet 100 de l'énveloppe 1, les figures 1 et 3 étant des coupes radiales, c'est-à-dire des coupes effectuées selon des plans contenant l'axe XX' de l'enveloppe 1. La nappe intérieure 11 a été représentée plus large que la nappe extérieure 12 mais il va de soi que l'invention s'applique par exemple aux cas où les nappes 11, 12 ont la même largeur et aux cas où la nappe extérieure 12 est plus large que la nappe intérieure 11. Au sommet 5, le corps 2 comporte deux faces: une face externe 13, disposée du côté du renfort 10, et une face interne 14 opposée à ce renfort.

La section radiale du sommet 5 du corps 2 est constituée de trois zones situées sous le renfort de sommet 10: deux zones latérales $Z_1$ et une zone centrale $Z_2$ adjacente aux zones latérales $Z_1$. Chaque zone latérale $Z_1$ est délimitée d'une part par une droite $N_{15}$ et d'autre part par une droite $N_{16}$, les deux droites $N_{16}$ étant disposées entre les

deux droites $N_{15}$. La zone centrale $Z_2$ est délimitée par les deux droites $N_{16}$. Chacune des droites $N_{15}$, $N_{16}$ est perpendiculaire à la face externe 13 au point où elle traverse cette face. Par définition, les droites $N_{15}$ sont telles que l'ensemble du renfort de sommet 10 soit disposé entre ces droites et limité par ces droites, les points 15 du renfort 10 situés sur ces droites étant appelés "bords du renfort de sommet 10".

Dans l'exemple représenté à la figure 3 les bords 15 du renfort de sommet 10 correspondent aux bords de la nappe intérieure 11, les bords 12b de la nappe extérieure 12 étant plus proches du plan équatorial que les bords 15, ce plan équatorial étant schématisé par la droite EE'. Si les bords 15 du renfort de sommet 10 correspondaient par exemple à une autre nappe que la nappe 11, les définitions précédentes s'appliqueraient en considérant cette autre nappe, le renfort 10 pouvant comporter éventuellement un nombre de nappes différent de deux. Les zones latérales $Z_1$ sont voisines des bords 15 du renfort de sommet 10.

La largeur $l_1$ de chaque zone latérale $Z_1$ correspond à la distance qui sépare les droites $N_{15}$, $N_{16}$ délimitant cette zone.

La largeur $l_2$ de la zone centrale $Z_2$ correspond à la distance qui sépare les deux droites $N_{16}$ délimitant cette zone.

La largeur L du sommet 5 du corps 2 correspond à la distance qui sépare les deux droites $N_{15}$, c'est-à-dire qu'elle est égale à la somme des deux largeurs $l_1$ et de la largeur $l_2$. Toutes ces mesures de largeurs sont effectuées le long de la face externe 13 du corps 2, et dans un plan radial qui est par exemple le plan de la figure 3.

L'épaisseur $e_0$ du corps 2 au niveau de chaque bord 15 est mesurée par définition le long de la droite N15 passant par ce bord. L'épaisseur $e_1$ du corps 2 en un point quelconque de chaque zone latérale $Z_1$ et l'épaisseur $e_2$ du corps 2 en un point quelconque de la zone centrale $Z_2$, sont mesurées chacune le long d'une droite N perpendiculaire à la face externe 13 et passant par ce point, ces mesures d'épaisseurs étant effectuées dans un plan radial qui est par exemple le plan de la figure 3.

L'épaisseur moyenne $e_{2m}$ du corps 2 dans la zone centrale $Z_2$ est définie par la relation:

$$e_{2m} = \frac{S_2}{l_2}$$

$S_2$ étant la valeur de la surface (c'est-à-dire l'aire) de la zone $Z_2$ mesurée dans un plan radial qui est par exemple le plan de la figure 3.

Dans un but de simplification l'épaisseur moyenne $e_{2m}$ n'est pas représentée sur le dessin.

Conformément à l'invention, les épaisseurs $e_0$, $e_1$, $e_{2m}$ et les largeurs $l_1$, L satisfont aux relations suivantes:

$$e_1 \geqslant 0,6\ e_0;\quad 0,02\ L \leqslant l_1 \leqslant 0,30\ L;\quad e_{2m} \leqslant 0,5\ e_0.$$

De préférence on a au moins une des relations suivantes:

$$0,6\ e_0 \leqslant e_1 \leqslant 1,2\ e_0;\quad 0,05\ L \leqslant l_1 \leqslant 0,20\ L;\quad e_{2m} \leqslant 0,3\ e_0;$$

on a avantageusement $0,6\ e_0 \leqslant e_1 \leqslant e_0$. On peut même envisager des réalisations où la zone centrale $Z_2$ est dépourvue de matière, c'est-à-dire que $e_2$ peut être nul ou pratiquement nul sur une partie ou sur la totalité de $Z_2$.

Le renfort de sommet 10 est réalisé de façon à ce qu'il puisse supporter après gonflage les efforts transmis par les flancs 4 et ceci malgré l'amincissement du sommet 5. Comme précédemment décrit, ce renfort de sommet peut par exemple comporter au moins deux nappes, chaque nappe comportant des câbles ou fils unitaires parallèles entre eux, l'angle de chaque nappe étant défini par l'angle que forment les câbles ou les fils de cette nappe avec le plan équatorial. Dans ce cas il est préférable que le renfort de sommet 10 soit conforme à l'une des deux réalisations suivantes:

1) Le renfort de sommet 10 comporte deux nappes et l'angle de chaque nappe est au moins égal à une valeur minimale $\alpha_m$ et au plus égal à une valeur maximale $\alpha_M$ telles que

$$\alpha_m = \frac{\alpha_0}{2}$$

$$\cos\alpha_M = 0,9\ \cos\alpha_0$$

l'angle $\alpha_0$ étant défini par la relation:

$$Tg^2\alpha_0 = \frac{R_s^2 - R_e^2}{2R_s^2\left(1 - \frac{1}{2}\frac{R_s^2 - R_e^2}{\rho_s R_s}\right)}$$

où:

— $\rho_s$ représente le rayon de courbure de la nappe considérée; ce rayon étant déterminé dans un plan radial, à l'intersection de cette nappe par le plan équatorial ou au voisinage de cette intersection; la figure 3 représente en partie le rayon $\rho_s$ relatif à la nappe 11;

$R_s$ représente la distance, par rapport à l'axe XX', de la nappe considérée, cette distance étant déterminée dans le plan équatorial; $R_s$ est représenté en partie à la figure 3 pour la nappe 11;

— $R_e$ représente la distance par rapport à l'axe XX' des points A, B où le corps a la plus grande largeur en section radiale, la courbure du corps en ces points étant supposée régulière, c'est-à-dire sans protubérance ou sans dépression en ces points; la largeur du corps est déterminée le long de la droite AB parallèle à l'axe XX'; la distance $R_e$ est représentée en partie à la figure 1.

Les définitions données précédemment pour $\rho_s$, $R_s$, $R_e$ correspondent à l'enveloppe 1 supposée non chargée, montée sur sa jante 7 et gonflée à sa pression nominale avec de l'air à température ambiante (environ 20°C).

Dans ce cas, les angles $\alpha_1$, $\alpha_2$ des deux nappes sont croisés, c'est-à-dire que les angles $\alpha_1$ et $\alpha_2$ ont des orientations opposées par rapport au plan équatorial comme représenté à la figure 2.

Lorsque l'angle de chaque nappe est inférieur à la valeur minimale $\alpha_m$ précédemment définie, il se produit un fluage axial excessif du corps provoquant une augmentation de sa largeur en section radiale. Lorsque l'angle de chaque nappe est supérieur à la valeur maximale $\alpha_M$ il se produit une augmentation excessive du diamètre extérieur de l'enveloppe au moment du roulage. Ces deux défauts rendent alors aléatoire l'utilisation de l'enveloppe.

2) Le renfort de sommet 10 comporte au moins trois nappes croisées de façon à former une triangulation, les angles des trois nappes étant différents les uns des autres. Dans ce cas, les angles de ces nappes peuvent varier dans de larges limites.

L'utilisation d'un renfort de sommet 10 limité à deux nappes, conformément à la première réalisation précédente est cependant préférée car elle permet la réalisation d'enveloppes relativement légères.

L'angle $\beta$ est défini par chaque droite N15 et la face interne 14 du corps 2, cet angle $\beta$ étant mesuré, dans un plan radial, à l'extérieur du corps 2 et en direction de la zone latérale $Z_1$ délimitée par cette droite N15 (figure 4). Cet angle $\beta$, dit "angle de raccord intérieur" est de préférence défini par la relation $70° \leqslant \beta \leqslant 130°$, de façon à faciliter la transmission des efforts entre les flancs 4 et le renfort de sommet 10. L'angle $\beta$ est dans ce but avantageusement défini par la relation $90° \leqslant \beta \leqslant 110°$.

L'amincissement représenté à la figure 3 est pratiquement discontinu, c'est-à-dire que les épaisseurs $e_1$, $e_2$ sont pratiquement constantes sauf au voisinage des droites N16 où ces épaisseurs varient brusquement. On peut cependant envisager des cas où la diminution de l'épaisseur du corps, à partir des droites N15 est progressive en direction du plan équatorial EE' sur au moins une partie du sommet 5 comme représenté à la figure 5. Cette solution peut avoir l'avantage de favoriser la régularité du transfert des efforts entre les flancs 4 et le renfort de sommet 10.

Les avantages de l'invention sont les suivants:

— la diminution de l'épaisseur au sommet se traduit par une diminution du poids de matière d'où un coût de fabrication moindre et ceci sans diminuer les performances de l'enveloppe;
— l'amincissement au sommet permet de diminuer la résistance au roulement de l'enveloppe.

A titre d'exemple, la demanderesse a comparé deux enveloppes de pneumatique de dimensions 135—13 comportant chacune un corps non renforcé dans les flancs et au sommet ce corps étant réalisé par moulage de polyuréthannes. Chacune de ces enveloppes comporte en outre une bande de roulement et un renfort de sommet disposé sur le corps entre le corps et la bande de roulement, le caoutchouc utilisé pour la bande de roulement et le renfort de sommet étant du caoutchouc naturel. La valeur $R_e$ est la même pour les deux corps, soit 220 mm.

Ces deux enveloppes sont identiques sauf au sommet où l'une a un corps d'épaisseur constante et l'autre un corps aminci conformément à l'invention. Le renfort de sommet de chaque enveloppe est constitué de deux nappes de câbles d'acier dont la disposition est analogue à celle des nappes 11, 12 précédemment décrites. La nappe intérieure 11 a une largeur de 86 mm et la nappe extérieure 12 a une largeur de 78 mm, ces largeurs étant mesurées dans un plan radial le long de la nappe considérée. La largeur L du sommet du corps est pratiquement égale à 86 mm. Les caractéristiques $\rho_s$, $R_s$ sont pratiquement les mêmes pour les deux nappes, soit $\rho_s = 200$ mm, $R_s = 262$ mm. Les nappes sont croisées, chacun des angles $\alpha_1$, $\alpha_2$ étant compris entre 18° et 29°, par exemple pratiquement égal à 23°.

Le sommet de chaque corps a les caractéristiques suivantes:

— pour l'enveloppe de type connu l'épaisseur du corps est constante au sommet et égale à 5 mm;
— pour l'enveloppe conforme à l'invention, $e_0$ est égale à 5 mm, $e_1$ varie de 5 mm à 3 mm, sur une largeur $l_1$ correspondante de 15 mm, $e_1$ diminuant en direction du plan équatorial, $e_{2m}$ est égale à 1,5 mm sur la largeur centrale $l_2$; $l_2 = L - 2 l_1 = 56$ mm; c'est-à-dire qu'on a les relations: $0,6 e_0 \leqslant e_1 \leqslant e_0$; $l_1 = 0,17 L$; $e_{2m} = 0,3 e_0$.

L'invention permet dans cet exemple de réaliser une économie de poids de 25% sur le poids du corps, soit une économie de poids d'environ 12% sur le poids total de l'enveloppe, et une diminution de la résistance au roulement de 5%.

Bien entendu, l'invention n'est pas limitée aux exemples de réalisation précédemment décrits. C'est ainsi par exemple que le renfort de sommet peut comporter au moins une nappe repliée.

## Revendications

1. Enveloppe de pneumatique (1) comportant un corps (2) et un renfort de sommet (10) disposé sur le corps (2), le corps (2) comportant deux flancs (4), deux bourrelets (3) avec chacun une tringle de renfort (6), et un sommet (5), le sommet (5) du corps (2) étant constitué de trois zones situées sous le renfort de sommet (10) à savoir deux zones latérales ($Z_1$) voisines des bords (15) du renfort de sommet (10) et une zone centrale

$(Z_2)$ adjacente aux zones latérales $(Z_1)$, le corps (2) étant dépourvu d'armature de renforcement dans les flancs (4) et au sommet (5), la concavité des flancs (4) étant tournée vers l'intérieur de l'enveloppe (1), caractérisée par les points suivants:

a) l'épaisseur $e_0$ du corps (2) au niveau des bords (15) du renfort de sommet (10) et l'épaisseur $e_1$ du corps (2) en un point quelconque de chacune des zones latérales $(Z_1)$ sont liées par la relation

$$0,6\ e_0 \leq e_1 \leq e_0;$$

b) la largeur $l_1$ de chaque zone latérale $(Z_1)$ et la largeur L du sommet (5) du corps (2) sont liées par la relation:

$$0,02\ L \leq l_1 \leq 0,30\ L;$$

c) l'épaisseur moyenne $e_{2m}$ du corps (2) dans la zone centrale $(Z_2)$ et l'épaisseur $e_0$ du corps (2) au niveau des bords (15) du renfort de sommet (10) sont liées par la relation:

$$e_{2m} \leq 0,5\ e_0;$$

d) chaque angle de raccord intérieur $\beta$ est défini par la relation

$$90° \leq \beta \leq 110°;$$

e) le renfort de sommet (10) comporte deux nappes croisées (11, 12), l'angle de chaque nappe (11, 12) étant au moins égal à une valeur minimale $\alpha_m$ et au plus égal à une valeur maximale $\alpha_M$ telles que:

$$\alpha_m = \frac{\alpha_0}{2}; \quad \cos \alpha_M = 0,9 \cos \alpha_0;$$

l'angle $\alpha_0$ étant défini par la relation:

$$Tg^2 \alpha_0 = \frac{R_s{}^2 - R_e{}^2}{2R_s{}^2 \left(1 - \frac{1}{2} \dfrac{R_s{}^2 - R_e{}^2}{\rho_s R_s}\right)}$$

où $\rho_s$ représente le rayon de courbure de la nappe considérée (11, 12), $R_s$ représente la distance de cette nappe (11, 12) par rapport à l'axe XX' de l'enveloppe (1), $R_e$ représente la distance, par rapport à l'axe XX' de l'enveloppe (1), des points A, B où le corps (2) a la plus grande largeur, dans une section radiale, la droite AB étant parallèle à l'axe XX' de l'enveloppe (1).

2. Enveloppe de pneumatique selon la revendication 1 caractérisée en ce qu'elle vérifie au moins une des relations suivantes:

$$0,05\ L \leq l_1 \leq 0,20\ L;\ e_{2m} \leq 0,3\ e_0.$$

3. Enveloppe de pneumatique selon l'une quelconque des revendications 1 ou 2 caractérisée en ce que les épaisseurs $e_1$ et/ou $e_2$ diminuent progressivement en direction du plan équatorial sur au moins une partie du sommet (5), $e_2$ étant l'épaisseur du corps (2) en un point quelconque de la zone centrale $(Z_2)$.

**Patentansprüche**

1. Luftreifen (1), enthaltend einen Körper (2) und eine Scheitelbewehrung (10), die auf dem Körper (2) angeordnet ist, der Körper (2) weist zwei Flanken (4), zwei Seitenwülste (3) mit jeweils einem Verstärkungskern (6) und einem Scheitel (5), wobei der Scheitel (5) des Körpers (2) aus drei Zonen besteht, die unter der Scheitelbewehrung (10) liegen, nämlich zwei lateralen Zonen $(Z_1)$, die den Rändern (15) der Scheitelbewehrung (10) benachbart sind und eine Zentralzone $(Z_2)$, die den lateralen Zonen $(Z_1)$ benachbart ist, auf; der Körper (2) ist mit keiner versehen Verstärkung in den Flanken (4) und in dem Scheitel (5) versehen und die konkave Seite der Flanken (4) ist ins Innere des Luftreifens (1) gedreht, dadurch gekennzeichnet, daß

a) die Dicke $e_0$ des Körpers (2) in Höhe der Ränder (15) der Scheitelbewehrung (10) und die Dicke $e_1$ des Körpers (2) in irgendeinem Punkt jeder der lateralen Zonen $(Z_1)$ durch die Beziehung

$$0,6\ e_0 \leq e_1 \leq e_0$$

verknüpft sind;

b) die Breite $l_1$ jeder lateralen Zone $(Z_1)$ und die Breite L des Scheitels (5) des Körpers (2) durch die Relation

$$0,02\ L \leq l_1 \leq 0,30\ L$$

verknüpft sind;

c) die mittlere Dicke $e_{2m}$ des Körpers (2) in der zentralen Zone $(Z_2)$ und die Dicke $e_0$ des Körpers (2) in Höhe der Ränder (15) der Scheitelbewehrung (10) durch die Relation

$$e_{2m} \leq 0,5\ e_0$$

verknüpft sind;

d) für jeden inneren Verbindungswinkel $\beta$ die Beziehung

$$90° \leq \beta \leq 110°$$

gilt;

e) die Scheitelbewehrung (10) zwei gekreuzte Lagen (11, 12) aufweist, wobei der Winkel jeder Lage (11, 12) zumindest gleich ist einem Minimalwert $\alpha_m$ und höchstens gleich ist einem Maximalwert $\alpha_M$, für die gilt:

$$\alpha_m = \frac{\alpha_0}{2}; \quad \cos \alpha_M = 0,9 \cos \alpha_0;$$

der Winkel $\alpha_0$ wird dabei durch die Beziehung:

$$Tg^2\alpha_0 = \cfrac{R_s{}^2 - R_e{}^2}{2R_s{}^2\left(1 - \tfrac{1}{2}\cfrac{R_s{}^2 - R_e{}^2}{\rho_s R_s}\right)}$$

definiert, wobei $\rho_s$ den Krümmungsradius der betrachteten Lage (11, 12) bedeutet, $R_s$ den Abstand dieser Lage (11, 12) bezüglich der Achse XX' des Reifens (1), $R_e$ steht für den radialen Abstand von der Achse XX' des Reifens zu den Punkten A, B, in denen der Körper (2) die größte Breite aufweist, wobei die Gerade AB parallel zur Achse XX' des Reifens (1) verläuft.

2. Luftreifen nach Anspruch 1, dadurch gekennzeichnet, daß er zumindest eine der folgenden Bedingungen erfüllt:

$$0{,}05\ L \leq l_1 \leq 0{,}20\ L;\ e_{2m} \leq 0{,}3\ e_0.$$

3. Luftreifen nach einem der Ansprüche 1 oder 2, dadurch gekennzeichnet, daß die Dicken $e_1$ und/oder $e_2$ in Richtung der Äquatorialebene zunehmend abnehmen auf zumindest einem Bereich der Scheitel (5), wobei $e_2$ die Dicke des Körpers (2) an irgendeinem Punkt der zentralen Zone ($Z_2$) ist.

## Claims

1. A tyre (1) having a body (2) and a crown reinforcement (10) arranged on the body (2), the body (2) having two sidewalls (4), two beads (3) having each a reinforcing ring (6) and a crown (5), the crown (5) of the body (2) being formed of three zones located below the crown reinforcement (10), namely two side zones ($Z_1$) close to the edges (15) of the crown reinforcement (10) and a central zone ($Z_2$) adjacent to the side zones ($Z_1$), the body (2) being without reinforcement structure in the sidewalls (4) and in the crown (5), the concavity of the sidewalls (4) facing the inside of the tyre (1), characterized by the following features:

a) the thickness $e_0$ of the body (2) along the edges (15) of the crown reinforcement (10) and the thickness $e_1$ of the body (2) at any point in each of the side zones ($Z_1$) are related by the relationship:

$$0.6\ e_0 \leq e_1 \leq e_0;$$

b) the width $l_1$ of each side zone ($Z_1$) and the width L of the crown (5) of the body (2) are related by the relationship:

$$0.02\ L \leq l_1 \leq 0.30\ L;$$

c) the average thickness $e_{2m}$ of the body (2) in the central zone ($Z_2$) and the thickness $e_0$ of the body (2) along the edges (15) of the crown reinforcement (10) are related by the relationship:

$$e_{2m} \leq 0.5\ e_0;$$

d) each inner connection angle $\beta$ is defined by the relationship:

$$-90° \leq \beta \leq 110°;$$

e) the crown reinforcement (10) has two crossed plies (11, 12), the angle of each ply (11, 12) being at least equal to a minimum value $\alpha_m$ and at most equal to a maximum value $\alpha_M$ such that:

$$\alpha_m = \frac{\alpha_0}{2};\ \cos \alpha_M = 0.9 \cos \alpha_0;$$

the angle $\alpha_0$ being defined by the relationship:

$$Tg^2\alpha_0 = \cfrac{R_s{}^2 - R_e{}^2}{2R_s{}^2\left(1 - \tfrac{1}{2}\cfrac{R_s{}^2 - R_e{}^2}{\rho_s R_s}\right)}$$

in which $\rho_s$ represents the radius of curvature of the ply in question (11, 12), $R_s$ represents the distance of said ply (11, 12) from the axis XX' of the tyre (1), $R_e$ represents the distance from the axis XX' of the tyre (1) of the points A, B where the body (2) has the greatest width in a radial section, the straight line AB being parallel to the axis XX' of the tyre (1).

2. A tyre according to claim 1, characterized by the fact that it has at least one of the following relationships:

$$0.05\ L \leq l_1 \leq 0.20\ L;\ e_{2m} \leq 0.3\ e_0.$$

3. A tyre according to any one of claim 1 or claim 2, characterized by the fact that the thicknesses $e_1$ and/or $e_2$ decrease progressively in the direction towards the equatorial plane over at least a portion of the crown (5), $e_2$ being the thickness of the body (2) at any point in the central zone ($Z_2$).



## Fig. 1

## Fig. 2

Fig.3

Fig.4

Fig.5